(19)

Europäisches
Patentamt
European
Patent Office
Office européen
des brevets

(11) **EP 2 244 194 A1**

(12) **EUROPEAN PATENT APPLICATION**

(43) Date of publication:
**27.10.2010  Bulletin 2010/43**

(51) Int Cl.:
***G06F 17/30*** *(2006.01)*

(21) Application number: **09380085.2**

(22) Date of filing: **24.04.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Moises Gonzalez, Jose Luis
28018 Madrid (ES)**

(72) Inventor: **Moises Gonzalez, Jose Luis
28018 Madrid (ES)**

Remarks:
Amended claims in accordance with Rule 137(2)
EPC.

(54)  **Method and apparatus for retrieving information using linguistic predictors**

(57)    The invention discloses a method and apparatus for information retrieval in scenarios where the relation between contents and user has a multilingual nature. The problem of content access subsists when the user does not have a standard capacity in the language of contents. The invention proposes a system so that access accounts for the user's variable linguistic capacity in the language of contents, and metrics and additional information can be generated which make possible an optimized access. The user's linguistic capacity is measured by applying the information of a linguistic knowledge base, personalized or predefined. The metrics computed include suitability predictors for the functions of understanding, learning and reviewing. The additional information supplements the deficits in user's knowledge for the toughest contents, and provides a method for improvement through the progressive training of the knowledge base.

FIG. 2

**Description**

**Technical Field**

This invention relates in general to computer-based information retrieval systems, and in particular, to a method and apparatus which carry out automated analyses of linguistic prediction in order to retrieve and/or classify information. These techniques can be used, among others, by information management systems, such as information retrieval systems or search engines, information filtering applications and information extraction applications.

**Description of the Related Art**

Continuous technological advance has made possible and promoted the coming into being of prodigious information systems which, in addition to agglutinating specific purposes, promote general spread of knowledge. Oftentimes, these systems are universal in character, as much in their aims and contents as in their physical and logic access means, as well as in their user base. This universality of users and contents entails the assumption of a fact inseparable to Humanity: multilingualism. Thus, it is common that users and contents use different languages for expression, which necessarily implies a negative effect on content's accessibility.

A great deal of technical effort has gone into trying to avoid the decreased access capacity to information that multilingualism imposes. Accordingly, there are translation systems of different workings for those users who do not know the language of a document. Further from efforts to make multilingual information universally comprehensible, particular efforts are carried out to make it accessible. These would include, for instance, information retrieval systems which perform searches and computations over documents on a plurality of languages, while those particular documents are not necessarily being translated or presented.

There exist several inventions under a variety of approaches which aim at bringing the contents closer to the users. US6360196 describes an information retrieval system which allows for formulating queries in a source language different from the searched documents' language. The system undertakes the improvement of cross-language search results by making them expressly independent from user's familiarity with target language. For the translation process it makes use of a multilingual resource of probabilistic nature, according to EP0813160. The probabilistic information refers to which translation of a given expression (word or collocation) is more likely, based on context.

US6349276 deals, more broadly, with an information retrieval system in which both queries and documents can occur in a plurality of languages, and in which intermediate transformations can be carried out to relate information occurring in two languages not initially comparable.

Up to this point, and in general, access to a given content from a linguistic point of view is merely focused on translation, necessarily implying source and target languages, whether it is so for contents or for query expressions, and it depends on the user knowing the language or not, but it does not depend on the extent of that knowledge. Usually, these systems do not go any further than offering global translations or looking up particular terms (frequently following on a user action). Likewise, multilingual resources aim at relating one language to another or to a plurality of languages, but always taking the body of the language (or part thereof) and not the user's knowledge as the knowledge base for the procedure. On the other hand, there exist linguistic computations applied to a single given language and not in translation, as for instance the Flesch-Kincaid or the ARI. However, their field of application is not the information retrieval systems of a multilingual concern.

Another kind of invention exists which aims at highlighting user's knowledge within the process. ES2110409 describes a decision making system using an artificial intelligence expert system and explicitly recognizes the need for user's experiences to contribute to the knowledge base. Those are systems devised for specific purposes which are based on symbolic processing and the modeling of operations enabling rules to be applied that are specific to a knowledge domain. The attempted goal is to assist the user in making decisions for the resolution of a problem belonging to a particular and specific knowledge domain, the automated assessment of proposed solutions being intrinsic to the process.

W09708604 presents yet another kind of processing, broadly independent from the linguistic form, whereby a conceptual representation of content is created, and further processing and search are carried out over this representation, instead of over literal terms in the language. All documents are initially interpreted in order to create their corresponding conceptual representation. Also by means of conceptual segmentation of text, W097048057 proposes a system to identify legal citations and aiming at taking an objective measure of similarity among documents, to finally perform an assignment of the text to a set category according to a scoring derived from the citations.

Moreover, there are publicly known applications in specific domains which gather information about the linguistic capacity of the user, for instance, pertaining to methods for progressive knowledge assessment (scored languages exams, such as computer-based TOEFL®) or to leveled learning methods. Generally, these systems provide a specific interface with which the user interacts primarily, frequently implicitly or explicitly answering questions to the system.

Taking all into account, we have seen that information management systems do not reach out to consider the role of the user's variable linguistic capacity, while those systems which gather information about the user's knowledge or experience, including those relating to linguistic capacity, all belong to specific domains. Previous state-of-the-art systems have not attempted to provide access to general contents based on a cognitive prediction on the document's level of expression and the user's linguistic capacity. Subsequently, there is a need for an invention which considers the linguistic capacity of the user of an information managing system, in particular for situations where access has a multilingual nature and occurs by means different from translation. It is therefore a primary goal of this invention to provide a computer system which makes use of predictive assessments of level of expression and linguistic capacity for the purpose of information retrieval, overcoming or diminishing the difficulties in accessing information imposed by multilingualism.

It seems fit to consider users accessing the contents as beginners or learners of a language (in general, users not at the standard ability), and who, regardless the specificity of the searched contents or knowledge domain to which those belong, may benefit from the linguistic analysis of the content and from a predictive assessment of the content's level in respect to his or her own capacity, be it measured or predetermined, and in respect to the simple understanding of the text or to other particular objectives. For example, language students may be interested in retrieving a text that simply reviews and strengthens linguistic knowledge pertaining to their particular level (lexical or otherwise), and/or in a challenging text which promotes their learning.

**Summary of the invention**

According to a first aspect of the invention, a method is provided to retrieve and/or classify information which calculates a linguistic assessment of the documents' contents utilizing a base of linguistic knowledge associated to the user. The assessment includes the computation of several kinds of predictors and indexes for different purposes. In a preferred embodiment, suitability indexes are included for at least the following: understanding (measuring how easy or difficult comprehension of the text may be for the user); learning (measuring how appropriate may the document be to expand user's knowledge); and reviewing (measuring the level of appropriateness of the document in consolidating user's previous knowledge). Relative suitability of some documents against others for a particular purpose can be estimated by a comparison of the predictors.

In a preferred embodiment, linguistic predictors are based on an estimate of the cognitive challenge between the user's level and that of the document. The cognitive challenge is an assessment of those elements which is feasible to incorporate to the user's knowledge, depending on the elements of knowledge which are already mastered and the relation among the new and the old elements. In linguistics, for instance, it would mean that it is more feasible to learn or use the words scream or whisper when speak is known, or that it is more feasible to master the conditional tense when the future tense in known. Besides semantics and syntax, this concept is general to other fields. For example, in mathematics, multiplication is learned subsequent to learning addition.

So, in this way, the understanding predictor grants a better score to documents right at the user's level, or below it. The learning predictor grants a better score to documents mainly at the user's lever or partially below, and then slightly over it for some other elements (these little-known elements are the focus of accessible knowledge, conveniently contextualized by enough well-known elements). The reviewing predictor grants a better score to documents mainly at the user's current level or at the level immediately below, for which frequency of recently-learned or not-so-well-known elements is higher. The computation of these predictors aimed at a specific utility does not preclude the computation of other general, well-known statistical indexes, which may or not be used in computing the predictors. For instance, these indexes may inform on a general level about the range and density of words and syntactic elements pertaining to the varying levels of knowledge which are defined.

The said knowledge base can be standardized or personalized. A standardized base is characterized by having a structure and previous contents which make up a division in categories not belonging to a particular user. As to languages, the knowledge and learning thereof, there are several standards establishing categories that users can be assigned to, depending on their linguistic capacity. For instance, the Council of Europe, under its initiative for standard reference level descriptions, has established a division into six categories (A1-C2) alongside their corresponding knowledge inventories. In any case, in an implementation of the invention a standardized knowledge base may or may not be based on one of these known standards. A personalized knowledge base is characterized by reflecting the knowledge of particular users, be it by adding their particular knowledge on a standardized base or by creating the base distinctively.

In a preferred embodiment, the knowledge base used by the invention starts out as a standardized base that progressively embodies an increasing amount of the user's particular knowledge. Addition and the assessment of new elements and the reevaluation of existing elements are all enabled. This information can be gathered implicitly or explicitly by the user, through the assessment of particular elements, feedback on predictions' appreciation or diagnostic tests, among others.

The knowledge base contains enough information to calculate the predictors that relates a linguistic element to the extent of knowledge (mastery) that a user has over it (a user in particular, or by categorization to a reference level). In general, this information is of probabilistic nature and changing throughout time, and it may be stored data or a computing result. In addition to information about the linguistic elements, inclusive of extra data specific to each kind of predictor, the base has capacity to store statistic information regarding the predictors, or corrections on previous predictions, so that coefficients which weigh the predictions result from it. Likewise, the base employed for a particular case is configurable according to parameters of general relevance, such as user's source language, and even so for one same content language. This is a feature which improves the performance of the invention's industrial application in that it takes into account the effect of cognate terms, such as those that exist amongst different romance languages or between English and those romance languages (term pairs like "aprobar" and "approve" between Spanish and English).

It follows that aggregate information about the linguistic elements, when applied to a content, allows for the content to be classified according to standardized reference categories or according to the user's linguistic capacity as reflected on his or her personalized base. A relationship is thus established between the document's level of expression and that of the users accessing it. This imposes a concern to information retrieval, which does not only depend on content, but also on the particular expression of content; in a certain way, the form is strictly part of the substance. The comparison between levels of expression allows for the retrieval of additional information of increased usefulness, which has a guiding nature and is not of and by itself content proper, but it is generated from linguistic assessment and prediction. For instance, having determined those expressions in the content which are not in the user's knowledge base (or in the standardized knowledge base the user has been assigned to), the retrieval procedure highlights them as forerunning information on a header, which provides the user with the ability to make a quick personal evaluation of the difficulties in the text; it inserts a contextual translation or explanation each time they appear on the text, to ease understanding; or it annexes other words in the same semantic field, which are well-known for the particular user, and promote reviewing. This additional information is just as well a managing means for the knowledge base itself, in that it provides the user with options to process that information, such as reevaluating or adding to the base those highlighted linguistic elements.

The method for information retrieval of this invention can take place in at least two scenarios. The first one occurs when the user carries out a search or request over a plurality of documents. The query may be initially formulated with linguistic search parameters or not. These parameters are, in general, related to information made available by applying the knowledge base. For instance, they can be applied to request that the retrieved document be classified within a set level of reference, or to meet a concrete value or threshold for a set predictor, and the like. When linguistic parameters are submitted from the outset of the search query, the linguistic characteristics of search can be applied either aggregated within the search process at the information system (including linguistic preprocessing of documents, as in pertaining to generation of access indexes and/or other statistics), or rather as a subsequent step. Processing over the results of search with linguistic features includes filtering, ordering, grouping and presenting predictions and additional information. The second scenario occurs when the user knows and points out the document which he or she wants to have retrieved and aims only at computing the predictions and additional information. Furthermore, the user may even directly submit a document for the said purpose. A particular use case for this scenario involves the user submitting documents with the purpose of improving (training) the probabilistic information in the knowledge base, by acting then on the management options drawn with the additional information.

To a certain extent, the second scenario where the user points out a document on which to calculate the prediction is simply an improper case of the first scenario, having the result set reduced to one document. Likewise, when a single predictor is worked out, such as the predictor for understanding, an improper case occurs in which predictions about learning or reviewing are being dismissed. In general, it is possible to apply the system under any reduction or simplification of similar nature.

According to a second aspect of the invention, an apparatus for information retrieval is provided which executes the method formerly described and is characterized by comprising means to calculate a linguistic assessment over the contents of the documents, means to perform a search or request of information, means to utilize a knowledge base associated to the user, means to evaluate the linguistic elements which appear on the documents, means to value the linguistic elements according to the user's knowledge base, means for computation of predictors and indexes, means for elaboration of guiding and managing additional information, and means for processing and providing the user with the results in a useful manner. Means for assessment include those necessary for computing several kinds of predictors and indexes for different purposes. In a preferred embodiment, means are included for suitability predictors of at least the following: understanding, the measurement of the difficulty and comprehensibility of the text for the user; learning, the measurement of the appropriateness of the document in expanding the user's knowledge; reviewing, the measurement of how appropriate the document may be in consolidating the user's previous knowledge.

The apparatus may be comprised of a programmable data processor.

## Brief description of the Drawings

A preferred embodiment of the invention will be further described, by way of example, with reference to the accompanying drawings, in which:

FIG. 1 is a block diagram of an apparatus for retrieving information in accordance with the present invention.
FIG. 2 is a flow diagram which shows a method of retrieving information in accordance with the present invention.
FIG. 3 is a more detailed flow diagram of a method similar to that in FIG 2.

**Detailed description of a preferred embodiment of the invention**

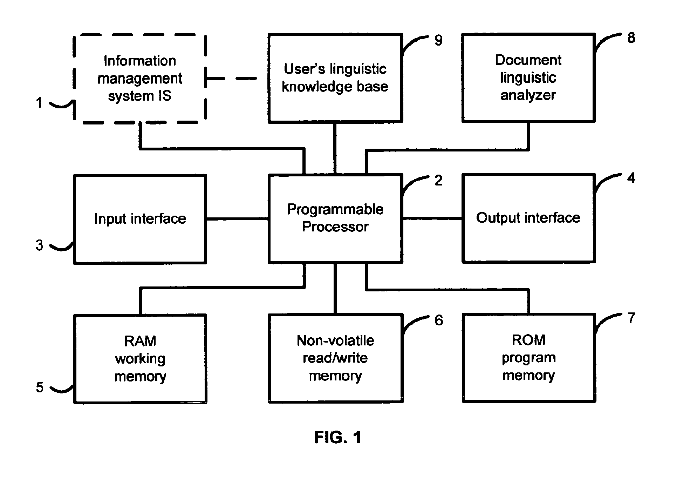

FIG. 1 illustrates an apparatus for information retrieval which employs an information management system 1, such as an Internet search engine. The apparatus is of the programmable data processor type, such as a computer, and comprises a programmable data processor 2 equipped with an input interface 3, such as mouse and keyboard, and an output interface 4, such as display and printer. The input interface 3 may be used for entering search commands or requests and for otherwise controlling operation of the apparatus. The output interface 4 may be used for displaying the results of searches or requests and for showing information about controlling the apparatus.

The data processor 2 has a processing memory in the form of RAM (Random Access Memory) 5 for temporarily storing data during data processing. A non-volatile read/write memory 6 is provided for information that must be retained, for example, when the power supply is unavailable. The program which controls the operation of processor 2 is contained in a program memory 7 in the form of ROM (Read Only Memory). The apparatus is further comprised of a linguistic analyzer for documents 8, which extracts the documents' linguistic elements in a comparable way, and a user's knowledge base 9, which contains the user's extent of knowledge or mastery over the comparable linguistic elements. Even though the linguistic analyzer 8 and the knowledge base 9 are illustrated as independent components of the apparatus, they may be embodied by the data processor 2 and memories 5 to 7.

The program memory 7 contains the said program which executes on data processor 2 and/or linguistic analyzer 8 and/or knowledge base 9. The program may be written in a variety of know computer languages as will be readily apparent to those having ordinary skill in computer programming. Therefore, the specific code itself is not detailed here.

The information managing system 1 is of the type which contains machine-readable documents and which is arranged to access or search for such documents on the basis of search queries or requests. The system 1 makes a list of candidate results available to the apparatus, for instance by downloading it to memory 5.

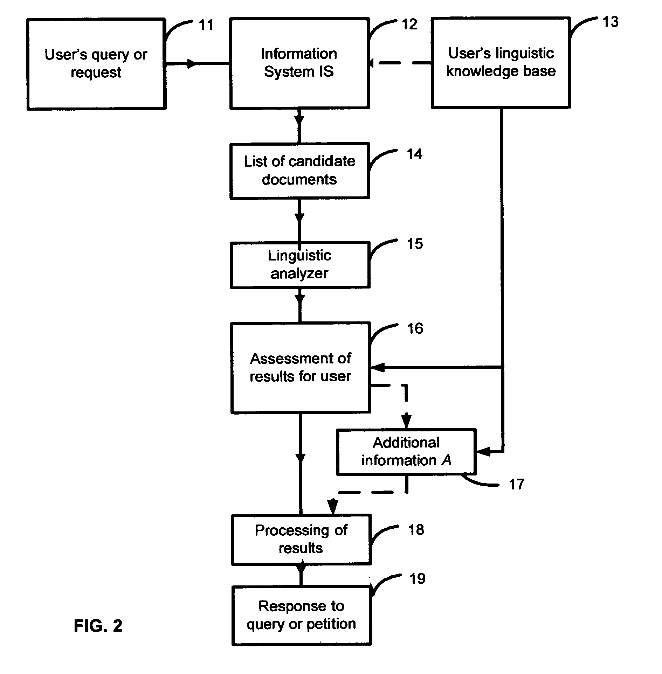

FIG. 2 illustrates a method of retrieving information which may be performed by the apparatus shown in FIG. 1. The user formulates a query or request 11 for a document in the information system 12, through the input interface 3. The query is applied directly to the retrieval information system 12, which may be one such system as an Internet search engine. The query is complemented with linguistic information from the user's linguistic knowledge base 13, provided that system 12 allows for it and that it is relevant; for instance, for having had any of the linguistic elements considered by the system already indexed.

Information system 12 produces a list of candidate documents 14, which results from satisfying the request of a particular document or from the matching process between the query parameters and the documents' contents. This list may include excerpts of the documents, alongside of the references to them. This list is processed by the linguistic analyzer 15, where a weighed evaluation of the linguistic elements (such as lexical and syntactic) characterizing each document or excerpt, or at least part of them, is obtained. The evaluation by analyzer 15 is employed to obtain the assessment 16 of results for the user. The assessment of results 16 includes calculation of the varying predictors and indexes considered, and it is based on comparison of the evaluation of linguistic elements appearing in the document to the degree of mastery as reflected on the user's linguistic knowledge base 13. The assessment of results 16 is then employed to obtain the additional guiding and managing information 17 and for processing of results 18.

The additional guiding and managing information 17 is based on the linguistic elements appearing with higher weighing in the documents and over which the user has a lesser mastery. Without being exhaustive, the guiding additional information contains definitions of words, further usage examples, expressions in the same semantic field, and explanations of syntactic constructions. Processing of results 18 comprises filtering and ordering of results for presentation to the user according to any of the predictors or indexes or to a combination thereof. For instance, the results may be filtered to include exclusively those within a set dispersion from the user's competence level, and then ordered according to the learning predictor. Processing 18 inserts the guiding and managing information 17 in the result set or in the documents presented to the user, thus making up the result of the query or request 19.

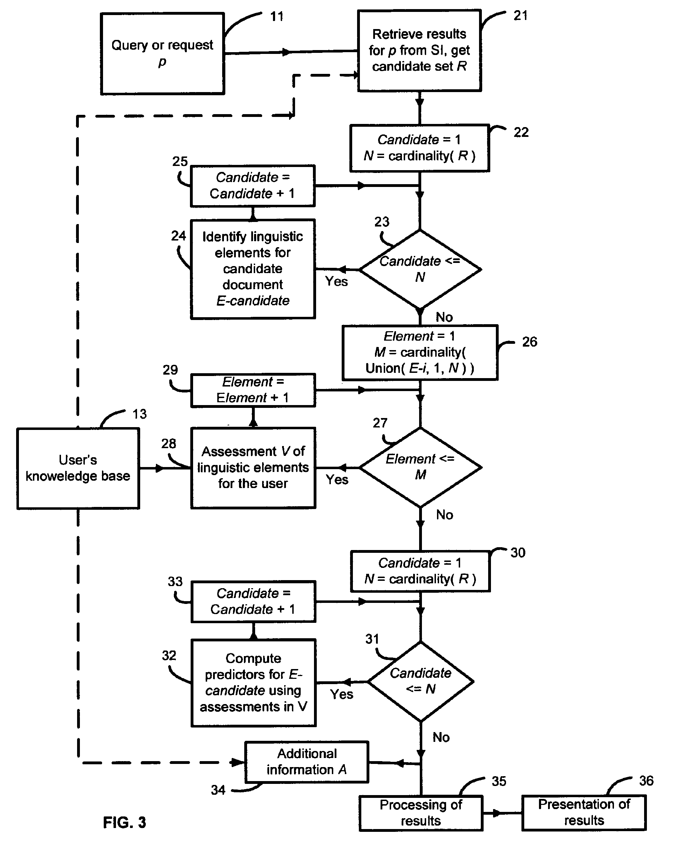

FIG. 3 illustrates with further detail part of a preferred embodiment of the method described in FIG. 2. Use of the method will be described in reference to accessing the contents of some specific but arbitrary documents in the English language.

The parametric query or request p at number 11, for this example the text "polar bear", is provided to the information managing system at step 21, which for this example is a search engine in English. For the purposes of this example, the system does not perform any preprocessing, such as indexing or the like, which makes it beneficial to access the user's linguistic profile or knowledge base 13 at this step, and it is so not considered. From step 21 a list or set R of candidate results for the response is obtained.

Step 22 sets the variable candidate to a value of 1 and the variable N to a value of the cardinality of set R. For the purposes of this example, a set with two candidate responses will be used. Step 23 checks whether the value of candidate is less than or equal to N, and if it is so proceeds to the step of analysis 24; if it is not so, proceeds to step 26. At step 24 the analysis of the linguistic elements for each candidate document is performed. The elements of several types which are progressively identified are added to each set E-candidate corresponding to each candidate document. Let us suppose that the following are excerpts of candidate documents A and B:

Document A: "Polar bears live along shores and on sea ice in the icy cold Arctic. When sea ice forms over the ocean in cold weather, many polar bears, except pregnant females, head out onto the ice to hunt seals".

Document B: "The polar bear is found throughout the Arctic Ocean and adjacent seas. Due to the absence of human development in its remote habitat, it retains more of its original range than any other extant large carnivore".

The following is a sample of some of the elements identified during linguistic analysis:

E-Document A: { polar, 2; bear, 2; live, 1; along, 1; shores, 1 ; ...; pregnant, 1; head out, 1; ...; present tense, delta_pt; time clauses, delta_tc;... }

E-Document B: { polar, 2; bear, 1; find, found, 1; ...; adjacent, 1; absence, 1; habitat, 1; ...; range, 1; extant, 1; carnivore, 1; ...; passive voice, delta_pv; causal clauses, delta_cc; ... },

where the different deltas are adjustable coefficients of the relative weight of found elements.

Step 25 increases the value of variable candidate by 1, and leads back to the check of step 23, securing that analysis is performed for the several candidate documents. Step 26 then follows, setting the variable element to a value of 1 and variable M to the value of the cardinality of the union-set of the different E-candidate sets. Variable M thus represents the number of linguistic elements for which checking the extent of the user's knowledge or mastery over them is wanted. Step 27 checks whether the value of element is less than or equal to M, and if it is so proceeds to the step of assessment 28; if it is not so, proceeds to step 30. At step 28, the assessment for each particular linguistic element is performed, using the information contained in the user's knowledge base 13. These assessments of a probabilistic nature are progressively added to a set V. The following is a sample of part of the set of assessments for the former documents and, particularly, for the extent of comprehension (as in ability to recognize the elements) of a given user:

V: { polar, 0.9; bear, 1.0; live, 1.0; along, 0.7; shores, 0.5; ... ; find, found, 0.6; adjacent, 0.3; habitat, 0.4; range, 0.3, extant, 0.0; carnivore, 0.5; ... ; present tense, 1.0; passive voice, 0.5; ... }

Step 29 increases the value of variable element by 1 and leads back to the check of step 27, securing that the assessment is performed for each linguistic element. Step 30 then follows, setting the variable candidate back to a value of 1 and variable N to the value of the cardinality of set R. Step 31 checks whether the value of candidate is less than or equal to N, and if it is so proceeds to the step of computation 32; and if it is not so, proceeds to steps 34 and 35. At step 32 the computation of the several predictors and indexes for each document is performed, using the information from the assessments-set V and from the corresponding elements-set E-candidate, in accordance with the definition of each particular predictor. The following is a sample of part of the computation of a predictor for understanding, based on the scalar product of the element's weigh in the document and their assessment, according to the former samples and assessments:

$$\text{Document A: } ( 2 * 0.9 + 2 * 1.0 + 1 * 1.0 + 1 * 0.7 + ... + delta\_pt * 1.0 ... ) / \text{Cardinality}( \text{E-document A})$$

$$\text{Document B: } ( 2 * 0.9 + 1 * 1.0 + ... + 1 * 0.0 + 1 * 0.5 + ... + delta\_pv * 0.5 ... ) / \text{Cardinality}( \text{E-document B})$$

Step 33 increases the value of variable candidate by 1 and leads back to the check of step 31, securing that the computation is performed for each of the several candidate documents. Steps 34 and 35 then follow. Step 34 consists in the elaboration of additional information A, which has the purpose of making the contents more accessible and useful to the user, by taking into account his or her particular knowledge and supplementing it in several possible ways. In particular, step 34 makes use of the user's linguistic knowledge base to, for instance, elaborate explanations of unknown expressions in terms of known expressions. The additional information generated at this step includes control mechanisms over the assessment and it is thus used to manage the knowledge base itself by, for instance, adding elements known by the user which were being assessed as null. For the sample document B and the former user's assessments V, the following is a sample of additional information A, having the control strings for management annotated in brackets:

A: {adjacent: next to [Mark as well known] ; extant: existing, alive [Mark as to be learned]; ... passive voice: is found - you can find [Ignore] 000}

The elaboration of additional information 34 being completed, step 35 of processing of results follows. The information generated in the previous steps is used here to refine the list of candidate results according to multiple criteria. For the present example, let us suppose that document A has an understanding predictor of 0.7, while document B has a predictor of 0.5. In a preferred processing, documents can be ordered by increasing difficulty in understanding, establishing in this case document A ahead of document B. If an understanding threshold of 0.5 is then applied, which discards all results below this level, it would confirm for this case the display of both results in the final response. Any existing additional guiding and/or managing information for document B is incorporated into the document at this step, be it by inclusion or by reference. The results so processed follow on to step 36, where they are display to the user through the output interface.

## Claims

1. A method for retrieving information in a given language, including the steps of:

   (a) performing a search or request in an information management system which produces a set of result documents;
   (b) performing an analysis of linguistic prediction by identifying and assessing the linguistic elements in a set of documents and their further comparison with information about the user's mastery of the language retrieved from a user's linguistic knowledge base, **characterized by**:
   (c) determining the linguistic elements appearing in the documents of the set;
   (d) assessing the extent of mastery of the linguistic elements by the user, utilizing a linguistic knowledge base;
   (e) computing specific predictors and/or indexes over the documents in the set;
   (f) processing these results according to the computations in order to provide them in a useful manner;
   (g) incorporating an additional information to facilitate access to the contents, which follows from the linguistic assessment and prediction, and which is used in managing the knowledge base.

2. A method according to claim 1, wherein said linguistic knowledge base in step (d) depends on parameters, including the user's native language and is:

   (a) a standardized linguistic knowledge base;
   (b) otherwise, a personalized linguistic knowledge base.

3. A method according to claim 2, wherein step (e) includes the computation of several predictors that include:

   (a) an understanding predictor, measuring how easy or difficult comprehension of the content may be for the user;
   (b) a learning predictor, measuring how appropriate the content may be to expand user's knowledge;
   (c) a reviewing predictor, measuring how appropriate the content may be to consolidate user's previous knowledge;
   (d) other well-known statistic indexes applied over the contents.

4. A method according to claim 1, wherein the search query in the information management system is augmented with that data from the user's linguistic profile which is admissible and relevant to the management system and/or its indexes, the result being an optimized linguistic search.

**5.** An apparatus for retrieving information in a given language, which executes the method of claim 1, comprising:

(a) means for performing a search or request in an information management system which produces a set of result documents;
(b) means for performing an analysis of linguistic prediction by identifying and assessing the linguistic elements in a set of documents and their further comparison with information about the user's mastery of the language retrieved from a user's linguistic knowledge base, **characterized by**:
(c) means for determining the linguistic elements appearing in the documents of the set;
(d) means for assessing the extent of mastery of the linguistic elements by the user, utilizing a linguistic knowledge base;
(e) means for computing specific predictors and/or indexes over the documents in the set;
(f) means for processing these results according to the computations in order to provide them in a useful manner;
(g) means for incorporating an additional information to facilitate access to the contents, which follows from the linguistic assessment and prediction, and which is used in managing the knowledge base.

**6.** An apparatus according to claim 5, wherein said means (d) for assessing the mastery of the linguistic elements depend on parameters, including the user's native language, and said means (d) are:

(a) for a standardized linguistic knowledge base;
(b) or otherwise, for a personalized linguistic knowledge base.

**7.** An apparatus according to claim 6, wherein the means (e) for computing specific predictors comprise:

(a) means for an understanding predictor, measuring how easy or difficult comprehension of the content may be for the user;
(b) means for a learning predictor, measuring how appropriate the content may be to expand user's knowledge;
(c) means for a reviewing predictor, measuring how appropriate the content may be to consolidate user's previous knowledge;
(d) means for other well-known statistic indexes applied over the contents.

**8.** An apparatus according to claim 5, comprising means for augmenting the search query in the information management system with that data from the user's linguistic profile which is admissible and relevant to the management system and/or its indexes, the result being an optimized linguistic search.

**Amended claims in accordance with Rule 137(2) EPC.**

**1.** A method for retrieving information in a given language, wherein the search query in the information management system is augmented with such data from a user's linguistic search profile which is comparable with those indexes of the information management system keeping a linguistic assessment of the accessible documents, thus producing a linguistic search personalized to the user's masters level in the language, **characterized by**:

(a) adding or updating a document in the information management system triggers the assessment of the linguistic elements of the document as based on a standard reference level framework for the given language, the document being subsequently indexed in the information system relative to this classification:
(b) augmenting the query issued by a search request to the information management system with that information from the user's linguistic search profile which is indicative of the user's mastery level of the given language relative to said standard reference level framework:
(c) matching the submitted user's mastery level in the given language to the indexed assessment of linguistic elements for the documents accessible through the information system;

**2.** A method according to claim 1, wherein said user's linguistic search profile in (b), indicative of the user's mastery level in a given language, and the correspondingly augmented linguistic query represent:

(a) an overall assessment of the user's general competence in the language;
(b) otherwise, a partition of the assessment of the user's competence in the language into different skills or competence areas in linguistics.

**3.** A method according to claim 2, wherein the assessment of the linguistic elements of the document as based on a standard reference level framework for the given language in (a) includes the computation of several predictors that include:

(a) an understanding predictor, measuring how easy or difficult comprehension of the content may be for the user;
(b) a learning predictor, measuring how appropriate the content may be to expand user's knowledge;
(c) a reviewing predictor, measuring how appropriate the content may be to consolidate user's previous knowledge;
(d) the classification of the document as pertaining to a level of the European Reference Level Framework or any such standard for the given language, be it overall or partitioned in different competence areas in linguistics.

**4.** An apparatus for retrieving information in a given language, which executes the method of claim 1, **characterized by**:

(a) means for adding or updating a document in the information management system triggers the assessment of the linguistic elements of the document as based on a standard reference level framework for the given language, the document being subsequently indexed in the information system relative to this classification;
(b) means augmenting the query issued by a search request to the information management system with that information from the user's linguistic search profile which is indicative of the user's mastery level of the given language relative to said standard reference level framework;
(c) means for matching the submitted user's mastery level in the given language to the indexed assessment of linguistic elements for the documents accessible through the information system;

**5.** An apparatus according to claim 4, wherein said means for a user's linguistic search profile in (b), indicative of the user's mastery level in a given language, and the correspondingly augmented linguistic query represent:

(a) an overall assessment of the user's general competence in the language;
(b) otherwise, a partition of the assessment of the user's competence in the language into different skills or competence areas in linguistics.

**6.** An apparatus according to claim 5, wherein the means for the assessment of the linguistic elements of the document as based on a standard reference level framework for the given language in (a) includes the computation of several predictors that include:

(a) means for an understanding predictor, measuring how easy or difficult comprehension of the content may be for the user;
(b) means for a learning predictor, measuring how appropriate the content may be to expand user's knowledge;
(c) means for a reviewing predictor, measuring how appropriate the content may be to consolidate user's previous knowledge;
(d) means for the classification of the document as pertaining to a level of the European Reference Level Framework or any such standard for the given language, be it overall or partitioned in different competence areas in linguistics.

| Information management system IS |
| :-: |
1

| User's linguistic knowledge base | 9 |
| :-: | :- |

| Document linguistic analyzer | 8 |
| :-: | :- |

| Input interface |
| :-: |
3

| Programmable Processor | 2 |
| :-: | :- |

| Output interface | 4 |
| :-: | :- |

| RAM working memory |
| :-: |
5

| Non-volatile read/write memory | 6 |
| :-: | :- |

| ROM program memory | 7 |
| :-: | :- |

**FIG. 1**

| User's query or request | 11 | Information System IS | 12 | User's linguistic knowledge base | 13 |

```
┌─────────────────┐        ┌─────────────────┐       ┌─────────────────┐
│ User's query or │   11   │   Information   │  12   │ User's linguistic│  13
│    request      │───────▶│   System IS     │◀- - - │  knowledge base  │
└─────────────────┘        └─────────────────┘       └─────────────────┘
                                    │                          │
                                    ▼                          │
                           ┌─────────────────┐  14             │
                           │ List of candidate│                │
                           │    documents     │                │
                           └─────────────────┘                 │
                                    │                          │
                                    ▼                          │
                           ┌─────────────────┐  15             │
                           │   Linguistic    │                 │
                           │    analyzer     │                 │
                           └─────────────────┘                 │
                                    │                          │
                                    ▼                          │
                           ┌─────────────────┐  16             │
                           │  Assessment of  │◀────────────────┤
                           │ results for user│                 │
                           └─────────────────┘                 │
                                    │         ┐                │
                                    │         ▼                │
                                    │  ┌─────────────────┐     │
                                    │  │   Additional    │◀────┘
                                    │  │  information A   │
                                    │  └─────────────────┘  17
                                    ▼  ┐
                           ┌─────────────────┐  18
                           │  Processing of  │
                           │    results      │
                           └─────────────────┘
                                    │
                                    ▼
                           ┌─────────────────┐  19
                           │  Response to    │
                           │query or petition│
                           └─────────────────┘
```

**FIG. 2**

FIG. 3

**EP 2 244 194 A1**

Europäisches Patentamt
European Patent Office
Office européen des brevets

# EUROPEAN SEARCH REPORT

Application Number

EP 09 38 0085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/102345 A2 (YISSUM RES DEV CO [IL]; RAPPOPORT ARI [IL]) 28 August 2008 (2008-08-28) * page 1, line 21 - line 28 * * page 1, line 34 * * page 2, line 17 - line 32 * * page 3, line 20 - line 29 * * page 3, line 32 * * page 4, line 13 - line 17 * * page 4, line 24 * * page 4, line 26 * * page 5, line 13 - line 18 * * page 6, line 18 - page 7, line 8 * * page 8, line 17 - line 22 * * page 8, line 32 - page 9, line 8 * * page 9, line 21 - line 25 * * page 11, line 24 - line 26 * ----- | 1-8 | INV. G06F17/30 |
| X | WO 00/14700 A1 (WILDE CBT NV DE [BE]) 16 March 2000 (2000-03-16) * abstract * * page 2, line 28 - page 4, line 22 * * page 6, line 26 - line 29 * * page 7, line 22 - page 8, line 16 * * page 10, line 14 - line 20 * * page 11, line 6 * * page 11, line 14 * * page 11, line 20 * ----- | 1-8 | TECHNICAL FIELDS SEARCHED (IPC) G06F |
| A | WO 98/13807 A1 (SYLVAN LEARNING SYSTEMS INC [US]; STUPPY JOHN J [US]) 2 April 1998 (1998-04-02) * abstract * * page 3, line 3 - line 11 * * page 21, line 23 - page 22, line 15 * ----- -/-- | 1-8 | |

The present search report has been drawn up for all claims

| Place of search | Date of completion of the search | Examiner |
|---|---|---|
| The Hague | 25 September 2009 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

Europäisches
Patentamt

European
Patent Office

Office européen
des brevets

## EUROPEAN SEARCH REPORT

Application Number

EP 09 38 0085

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/074894 A1 (REMAHL THOMAS [US]; SUMMERS BOB [US]; TSANG ANDY [US]) 6 April 2006 (2006-04-06) * paragraph [0012] *<br>----- | 1-8 | |
| A | WO 01/91085 A2 (SAFRAN ROBERT L SR [US]) 29 November 2001 (2001-11-29) * abstract *<br>----- | 1-8 | |

TECHNICAL FIELDS
SEARCHED      (IPC)

The present search report has been drawn up for all claims

| Place of search | Date of completion of the search | Examiner |
|---|---|---|
| The Hague | 25 September 2009 | de Castro Palomares |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 09 38 0085

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2009

| Patent document cited in search report | | Publication date | Patent family member(s) | | Publication date |
|---|---|---|---|---|---|
| WO 2008102345 | A2 | 28-08-2008 | NONE | | |
| WO 0014700 | A1 | 16-03-2000 | EP | 1118069 A2 | 25-07-2001 |
| | | | WO | 0042589 A2 | 20-07-2000 |
| WO 9813807 | A1 | 02-04-1998 | AT | 229214 T | 15-12-2002 |
| | | | AU | 730665 B2 | 08-03-2001 |
| | | | AU | 4487097 A | 17-04-1998 |
| | | | BR | 9713230 A | 04-04-2000 |
| | | | CA | 2266025 A1 | 02-04-1998 |
| | | | CN | 1231752 A | 13-10-1999 |
| | | | DE | 69717659 D1 | 16-01-2003 |
| | | | DE | 69717659 T2 | 18-09-2003 |
| | | | DK | 934581 T3 | 24-03-2003 |
| | | | EP | 0934581 A1 | 11-08-1999 |
| | | | ES | 2188988 T3 | 01-07-2003 |
| | | | HK | 1020222 A1 | 16-05-2003 |
| | | | IL | 128979 A | 20-06-2004 |
| | | | JP | 2001501320 T | 30-01-2001 |
| | | | KR | 20000048616 A | 25-07-2000 |
| | | | NO | 991183 A | 10-05-1999 |
| | | | NZ | 334584 A | 23-02-2001 |
| | | | PT | 934581 E | 30-04-2003 |
| US 2006074894 | A1 | 06-04-2006 | NONE | | |
| WO 0191085 | A2 | 29-11-2001 | AU | 6483101 A | 03-12-2001 |
| | | | US | 6685476 B1 | 03-02-2004 |
| | | | US | 2004072130 A1 | 15-04-2004 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6360196 B
- EP 0813160 A
- US 6349276 B
- ES 2110409
- WO 9708604 A
- WO 97048057 A